# EUROPEAN PATENT SPECIFICATION

(11) **EP 3 319 228 B1**
(45) Date of publication and mention of the grant of the patent: **10.07.2019**
(21) Application number: 17001817.0
(22) Date of filing: 07.11.2017
(51) Int. Cl.: H02S 30/10, H02S 20/23, F24S 25/20, F24S 25/67, F24S 25/632, F24S 20/67

(54) **AN INTEGRATED SOLAR PANEL TO A TILED ROOF**
INTEGRIERTES SOLARPANEEL AUF EINEM ZIEGELDACH
PANNEAU SOLAIRE INTÉGRÉ À UN TOIT EN TUILES

(30) Priority: 08.11.2016 EE 201600048
(43) Date of publication of application: 09.05.2018
(73) Proprietor: Solarstone OÜ, 71004 Viljandi maakond (EE)
(72) Inventor: Jürimäe, Mattis, 61708 Tartu maakond (EE); Kukk, Mait, 69602 Viljandi maakond (EE); Aednik, Silver, 50406 Tartu maakond (EE)
(74) Representative: Koitel, Raivo

(56) References cited:
- DE-A1-102011 104 516
- JP-A- 2003 027 674
- JP-A- 2003 168 816
- JP-A- 2003 314 009
- JP-A- 2004 132 054
- US-A1- 2003 201 009
- US-A1- 2004 154 655

## Description

### TECHNICAL FIELD

This invention belongs in the field of electrical engineering and construction materials, specifically in the field of construction materials with solar panels, which produce electricity and can be integrated with roofing tiles used for the construction of tiled roofs.

### PRIOR ART

The increasing trend of using alternative energy sources in the construction of private houses has resulted in the elaboration of various designs for the mounting of solar panels. Mounting the solar panels on the roof of buildings is widely used. In order to simplify the process of solar panel installation, various solutions have been proposed for integrating power production elements into the surface of common construction materials. Usually, the most problematic is the mounting of solar panels to tiled roofs, therefore solar panels in the shape of roofing tiles have been proposed as a solution. For example, the document US2015/0136206A1, 21.05.2015, Ecomol AG describes a solution, where the roofing tile is cast of concrete in such a manner that the topmost waveform surface of the tile is replaced with a flat surface to which a solar cell is mounted and the tiles are prepared with respective openings for the connection wires of the solar panels. Then the solar panels are interconnected electrically on the inner surface of the roof. This solution can be used in new construction, when the attic section of the building has not been finished yet. In case of existing buildings, replacing the roofing tiles with solar panel roofing tiles is problematic. Using this solution in colder and more humid climates is also impossible, because when the roof is built, it is covered with a moisture barrier before the installation of roofing tiles, after which connecting the solar panels on the inner surface of the roof becomes almost impossible.

The document US2016/0231024 A1, 11.08.2016, Johan Cornelissen, also describes a solution, where in the roofing tile production process (moulding), a solar cell is fixed to the upper surface of the roofing tile, and an opening is formed inside the roofing tile for the electrical wires of the solar panel. Again, building a roof of such tiles is easy in new construction, but replacing the roofing tiles of existing buildings with the roofing tiles described in the document involves problems in connecting the solar panels. The document US 2015/0263664 A1, 17.09.2015, David Tomolillo, describes a mean, whereby on tiled roofs with a flat profile flat roofing tiles are replaced with metal plates in order to facilitate retrofitting of a solar panel structure to the metal plates. This solution, however, is not suitable for roofs built with profile roofing tiles. A solution similar to the previous one has been described in the document US2016/0164453, 9.06.2016, Solarmass Limited, where on a roof of flat tiles the roofing tiles in one row are replaced with a solar panel, which consists of solar cells that are mounted, for example, on a plastic sheet.

A solution closest to this invention is described in the document WO 2012/170893 A1, 13.12.2012, Decra Roofing Systems, Inc. The named document describes a solar panel installed on a tiled roof, consisting of a base plate and solar cells, which are mount thereto and are electrically interconnected. There are overlap portions at the edges of the base plate, which follow the profile of the roofing tile used, meaning that if the solar cell on the named base plate is mounted to the roof, then the upper portion will underlap the roofing tiles above it and the lower portion will overlap the roofing tiles beneath it. The problem with such solution is that if intending to install the solar panel on a roof of tiles of another manufacturer, the overlapping portions must be adjusted (forged) to the roofing tiles with a different profile, wherefore the base plate together with the solar panel mounted thereto need to be redesigned each time according to the profile of the roofing tile used in building the roof.

DE 10 2011 104 516 A1 discloses an integrated solar panel for a tiled roof according to the preamble of claim 1.

### DESCRIPTION OF THE INVENTION

The purpose of this invention is to provide a technical solution for replacing roofing tiles with solar panels, whereby the base or frame together with the solar panel is always standard and the whole structure is adjusted by means of simple extra elements attached thereto to the profile of the roofing tiles used for building the tiled roof.

In order to achieve the purposes of this invention, the authors propose the integrated solar panel for a tiled roof according to claim 1, where the solar panel is attached to a frame in which the frame profile on the sides (left side and right side) makes it possible to easily fix thereto a transition that adheres to the profile of the roofing tile, while the lower edge of the frame of the solar panel overlaps the tile row below it in order to prevent rainwater from penetrating beneath the roofing tiles, and the lower surfaces of roofing tiles of the upper tile row are supported on the top edge of the frame of the solar panel.

### LIST OF FIGURES

This invention is described in more detail below with references to figures, where
Fig. 1 shows the integrated solar panel for tiled roofs as provided in this invention;
Fig. 2 shows the integrated solar panel in side view, to illustrate the left side profile and right side profile of the frame;
Fig. 3 shows one side profile (left) together with the support pad, to illustrate the fixing of the support pad to the support plate;
Fig. 4 shows the integrated solar panel in top view as provided in this invention;
Fig. 5 shows a section of the integrated solar panel along the line A-A to illustrate the upper and lower side profile of the frame;
Fig. 6 shows a section of the integrated solar panel along the line B-B to illustrate the side profile of the frame on the left side and the right side;
Fig. 7 shows the integrated solar panel in top view together with broken-out sections in detail view to illustrate the connection of the top and bottom profile and the left side and right side profile;
Fig. 8 shows the integrated solar panel as provided in this invention together with a roof mounting profile attached to the top profile of the frame of the named solar panel;
Fig. 9 shows a section along the line C-C in Figure 8, to illustrate the roof mounting profile attached to the integrated solar panel;
Fig. 10 shows a broken-out section in detail view of the mounting of the integrated solar panels to roofing battens;
Fig. 11 shows an integrated solar panel as provided in this invention installed on a tiled roof of a building.

### EMBODIMENT OF THE INVENTION

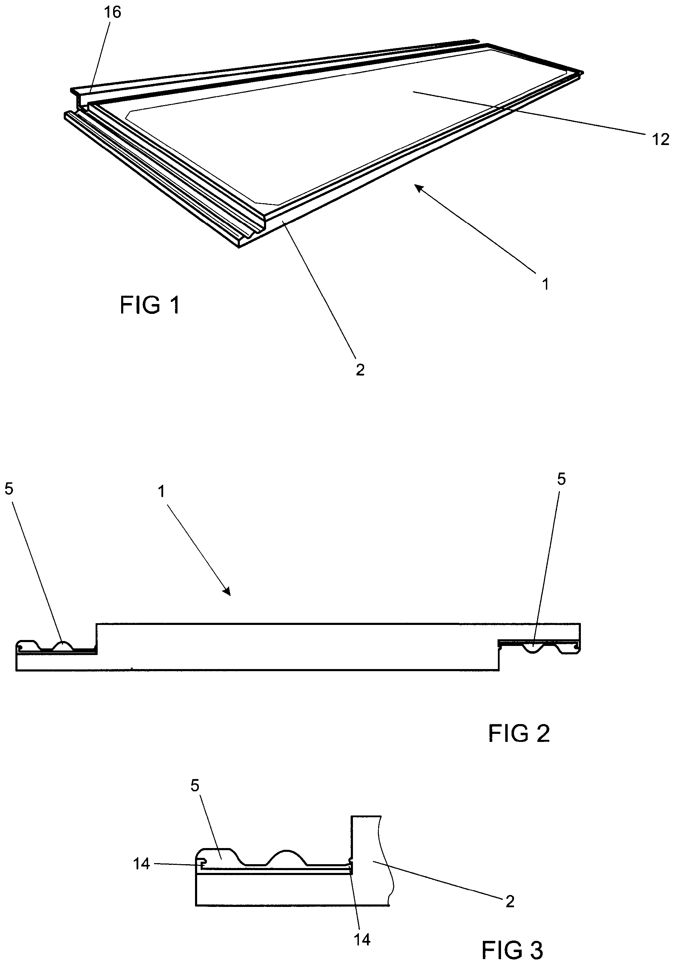

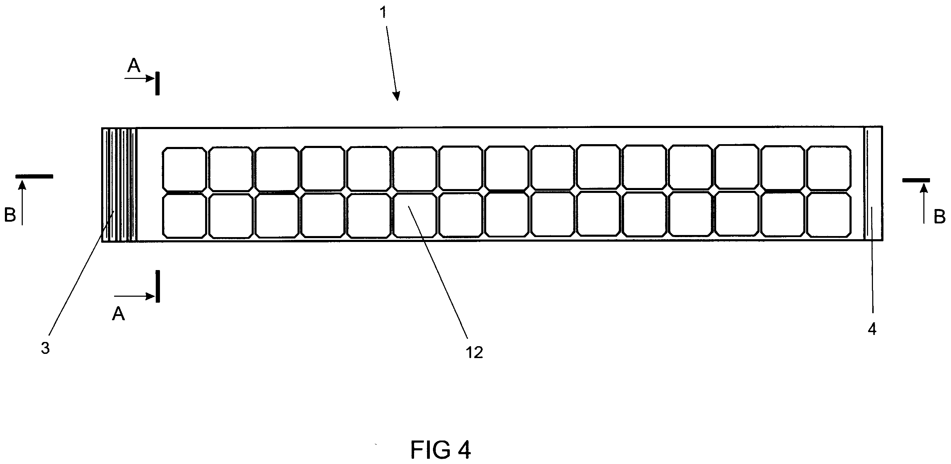

Figures 1 and 4 show the solar panel 1 integrated with a tiled roof in line with this invention, which includes frame 2 that is produced from profiles with a special design: left side profile 3, right side profile 4 and top and bottom profile 6. The named profiles are interconnected at the ends, so that a rectangular frame is formed, where solar cell 12 is positioned and attached. In addition, support pads 5 with a profile that adheres to the lateral (right side or left side, respectively) mounting profile of the roofing tile are attached to the side profiles (Figures 2, 3).

The top, bottom, left-side and right-side profile can be produced, for example, from aluminium, which is a material widely used in the production of special profiles, because it allows forming such profiles easily into frames and other structures with the required size. However, the profiles under this invention can also be produced from plastic, making the whole block of integrated solar panel lighter and more weather-resistant.

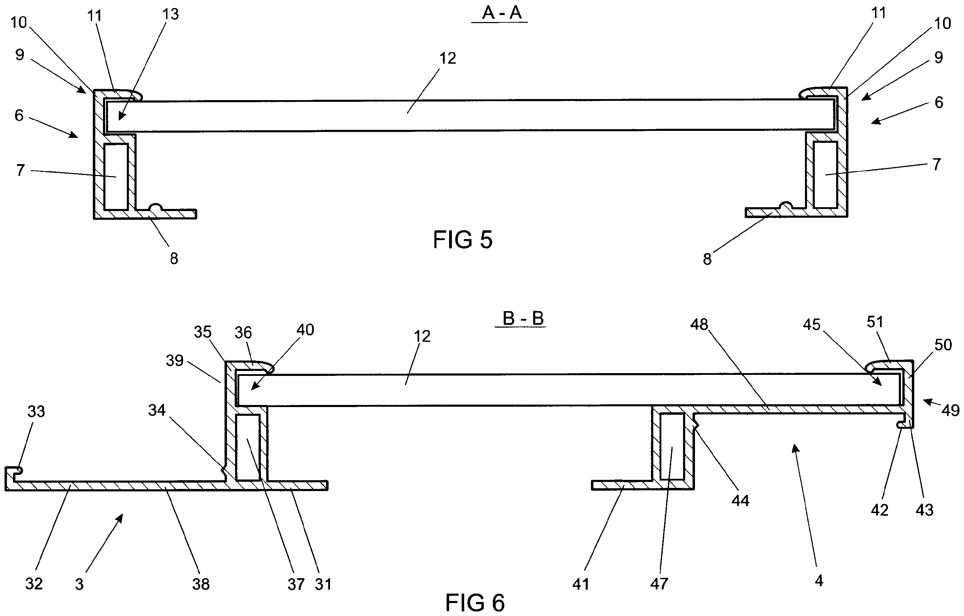

The top and bottom profile (Figure 5) of the frame of the integrated solar panel under this invention are similar, containing a hollow core 7 with a rectangular cross-section, where the lower shorter side is elongated by a lower support element 8. The support element 8 is used for mounting the overlapping integrated solar panel from below to the solar panel beneath or to a roofing batten by means of a respective clamp (not shown in the Figure). The longer side (farther side perpendicular to the support element 8) of the core 7 is elongated by a mounting element 9, where the edge 11 of a protruding part 10 extending from the longer side of core 7 is pointed at 90 degrees towards the support element, becoming parallel with the lower support element 8. In the assembly of the integrated solar panel, the solar panel is installed into a channel 13, which is formed between the mounting element 9 and the upper shorter side of core 7.

The left side profile 3 and the right side profile 4 of frame 2 contain essentially the same elements, but the right-side mounting edge of the roofing tile is placed on top of the left side profile 3, while the right side profile 4 of the integrated solar panel is placed on top of the left-side mounting edge of the roofing tile (Figure 6).

The left side profile 3 of frame 2 also contains a hollow core 37 with a rectangular cross-section, where the lower shorter side is elongated by a lower support plate 38, which extends over both sides of core 37. The longer section 32 of the lower support plate 38 that extends to the left side of the core is designed for mounting the support pad 5. For this purpose, the edge of the longer section 32 of the support plate (on the left side of the core) is first turned up by 90 degrees (becoming perpendicular to the lower support plate) and then the same edge is turned 90 degrees towards the core (becoming parallel with the lower support plate), forming thereby a mounting flange 33, behind which a respective step 14 of support pad 5 is fixed. For fixing the other side of support pad 5 to support plate 38, a second mounting flange 34 is formed at the bottom of the side of the longer section 32 of the support plate of core 37. Similarly to the top and bottom profile of the frame, the longer left side of core 37 is elongated by a mounting element 39, where the edge 36 of section 35 extending from the longer side of core 37 is pointed at 90 degrees towards section 31 of the shorter support plate of the lower support plate 38, becoming parallel with the support plate. In the assembly of the integrated solar panel, the solar cell is installed in a channel 40, which is formed between the mounting element 39 and the left side profile of the upper shorter side of core 37.

The right side profile 4 of frame 2 also contains a core with a rectangular cross-section, which, for example, can be hollow, where the lower shorter side is elongated by a lower support element 41 that extends to the left of the core and provides the frame structure with stability and means for attachment. For the extension of the upper shorter side of core 47 is an upper support plate 48, which extends to the right of core 47, i.e. in the opposite direction from the lower support element 41. At the edge of the upper support plate 48 is thereby formed a perpendicular mounting element 49, which extends to both sides of the upper support plate. Edge 51 of the upper section 50 of the mounting element is turned at 90 degrees back towards core 47, becoming parallel with the upper support plate 48. In the assembly of the integrated solar panel, the solar cell is installed in channel 45 of the right side profile formed between the edge 51 of the mounting element and the upper support plate, so that the solar cell is also supported on the upper support plate 48. The edge of lower section 42 of mounting element 49 is pointed at 90 degrees towards core 47 (becoming parallel with the upper support element 48), forming thereby the mounting flange 43, behind which is fixed a respective step 14 of the support pad 5 placed against the lower surface of upper support plate 48. In order to fix the other side of support pad 5 to the upper support plate 48, the second mounting flange 44 is formed in the upper section of the longer side, which is closer to the support plate of core 47.

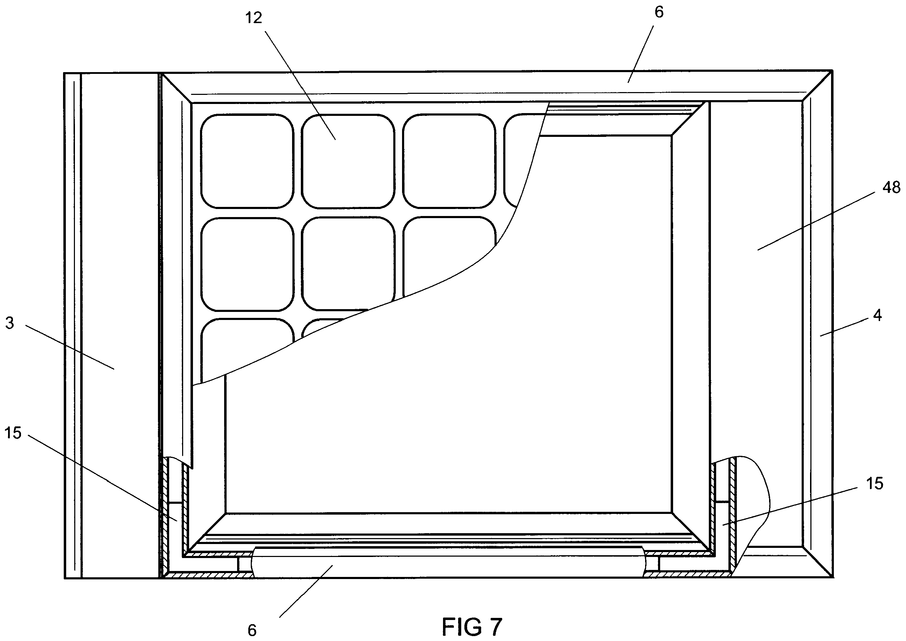

The top and bottom profile 6 are connected with the left and right side profile by means of profile mounting corners 15, so that one branch of the L-shaped corner is pushed from the right side end of the top profile respectively into the hollow in core 7 by means of a tensioner, and the other branch is also pushed into the hollow from the upper end of core 47 of the right side profile by means of a tensioner (see Figure 7). The same procedure applies to mounting one branch of the mounting corner to the end of the second upper profile, and the second branch of the mounting corner into the hollow in the upper end of the core 37 of the left side profile. This is followed by installing a solar cell between the three profiles. In order to complete the frame, mounting angles are then fixed to both ends of the bottom profile and the other branches of the mounting angles are then pushed respectively into the hollow in the left side profile and into the hollow in the right side profile, resulting in the formation of a frame, which contains a solar cell. In the process of casting the profiles, the hollows in the profile bodies can be formed with longitudinal protrusions running along the wall of the hollow (not shown in the Figure) to improve fixed (tensioned) connection between the mounting angle and the profile. The longitudinal protrusions can be formed inside the hollow of the core along all internal walls, and there may also be more than one longitudinal protrusion on one wall.

Support pads 5, which are used for placing the frame 2 between the mounting profiles of the integrated solar panel and roofing tiles, are identical both in the left side profile 3 and the right side profile 4, providing this invention thereby with an advantage in comparison to earlier solutions, because frame 2, where the solar panel is installed, can be used with roofing tiles of any mounting profile. Only the profile of the support pads changes, but producing the pads is substantially easier. Support pads 5 are made of plastic, elastic rubber or any other flexible material, which ensures that rainwater cannot penetrate through the joint between the roofing tile and the integrated solar panel to the lower surface of the roof of the building, and the joint of the integrated solar panel is able to adapt to expansion/shrinking of materials on account of temperature fluctuation, avoiding thus any permanent deformations in the frame and the integrated solar panel.

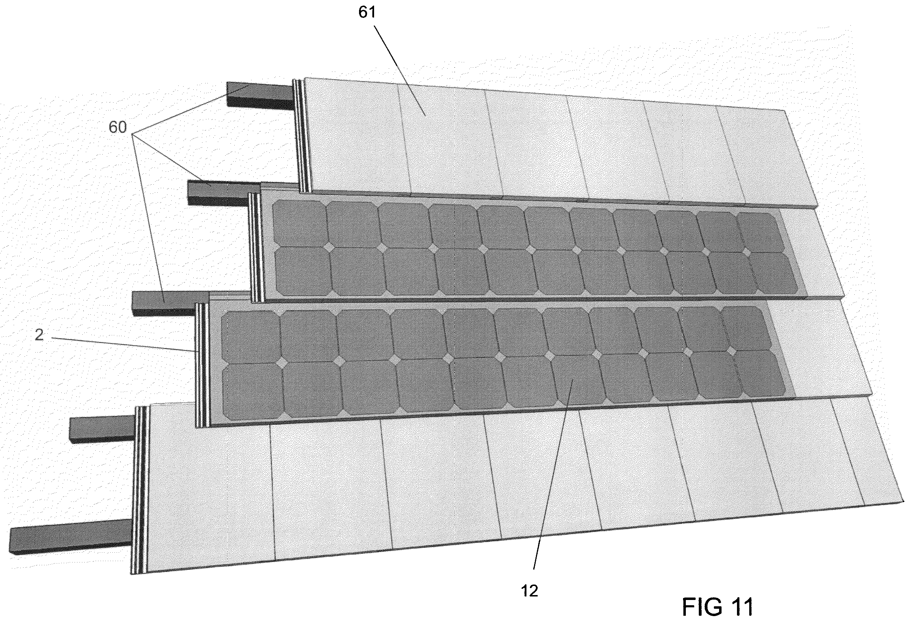

An integrated solar panel corresponding to the invention is mounted to the roofing batten 60 of a tiled roof, so that the lower edge of the solar panel overlaps the roofing tile row beneath it, the right side profile of the frame of the solar panel reaches over the roofing tile to its right, so that the support pad fixed to the upper support plate of the right side profile is supported on the respective mounting profile of the roofing tile (see Figure 11). The mounting profile of the bottom right side of the roofing tile is mounted to the support pad of the left side profile of the frame of the solar panel.

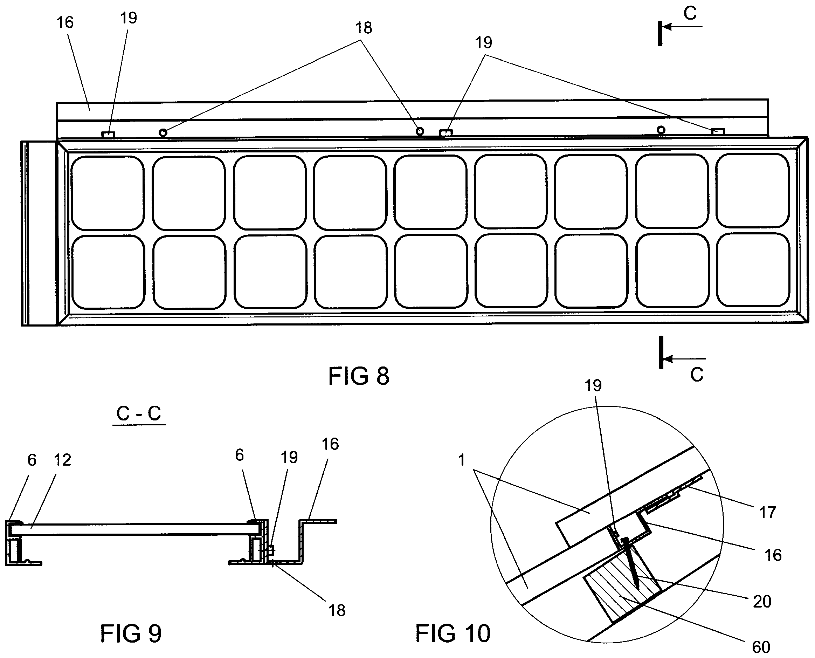

The integrated solar panel is mounted to the roofing batten, using a roof mounting profile 16, which is fixed to the top profile of the frame of the integrated solar panel by means of fasteners 19. The roof mounting profile can have, for example, a U-shaped cross-section, where one side is by approximately twice the length of the other side, while the longer side of the U-profile is pointed/bent at an approximately 90 degree angle outwards, away from the shorter side. The side of the roof mounting profile, which is bent outwards, is used as needed for supporting the next upper integrated solar panel or the next (upper) row of roofing tiles supported on the solar panel. Clamp 17 is mounted to the lower side of the upper integrated solar panel, and the longer, outwards bent side of the mounting profile of the lower integrated solar panel is hooked behind it during the installation of solar panels. This will thereby fix the upper solar panel to the lower solar panel and prevent the loosening of the panels, for example in high wind conditions. The roof mounting profile 16 includes openings 18 for attaching the profile to the roofing batten 60 by means of mounting screws/nails 20 (see Figure 9 and Figure 10).

After a solar panel is installed and mounted to the roofing batten, mounting of the row of roofing tiles 61 is continued by positioning the tile to be mounted to the left of the solar panel, so that it will sit on top of the left side profile of the frame, while the mounting profile at the bottom right of the roofing tile follows the profile of the support pad fixed to the left side profile of the frame of the solar panel. Roofing tiles are mounted by placing the lower ends of tiles located above the solar panel across the edge of the solar panel, at this the roofing tiles are supported on a roof mounting profile, which in an alternative embodiment is fixed on a roofing batten that remains under the upper edge of the solar panel, in order to reduce thus the pressure of roofing tiles on the solar cells. The integrated solar panels under this invention can be installed in a number of rows according to the electrical capacity required, in which case the edge of the upper solar panel overlaps the upper edge of the solar panel beneath it, and is also supported by an extra profile that is fixed to the roofing battens.

### List of structural elements

1 - integrated solar panel
2 - frame
3 - left side profile
31 - shorter section of support plate
32 - longer section of support plate
33 - mounting flange
34 - second mounting flange
35 - elongated part
36 - edge of the elongated part
37 - hollow core in the left side profile
38 - lower support plate
39 - mounting element
40 - channel in the left side profile
4 - right side profile
41 - lower support element
42 - lower part of mounting element
43 - mounting flange
44 - second mounting flange
45 - channel in the right side profile
47 - hollow core of right side profile
48 - upper support plate
49 - mounting element
50 - upper section
51 - edge of upper section
5 - support pads
6 - top and bottom profile
7 - hollow core
8 - lower support element
9 - mounting element
10 - protruding part
11 - edge
12 - solar cell
13 - channel
14 - step of the support pad
15 - mounting corner for profiles
16 - roof mounting profile
17 - clamp
18 - mounting openings
19 - fastener of roof mounting profile
20 - mounting screw/mounting nail
60 - roofing batten
61 - row of roofing tiles

## Claims

1. An integrated solar panel (1) for a tiled roof, which comprises a solar cell (12), frame (2) and supports pads (5), the frame (2) is formed by a left side profile (3), right side profile (4) and a top as well as bottom profile (6), which are mutually connected at the ends to form a rectangular frame, **characterised in that**
- the top and bottom profile (6) include a core (7) with a rectangular cross section, where the lower side is elongated by a lower support element (8), and the longer side of the core (7) more distant from the support element is elongated by a mounting element (9), where the edge (11) of a protruding part (10) extending from the longer side of core (7) is pointed towards the lower support element (8), becoming parallel with the lower support element (8), while the upper or lower edge of the solar panel is mounted respectively into a channel (13) between the mounting element (9) and the upper side of the core (7) in the course of assembly of the integrated solar panel;
- the left side profile (3) includes a core (37) with a rectangular cross section, where the lower side is elongated by a lower support plate (38), which reaches to both sides of the core (37), while the shorter section (31) of the support plate is formed on the right side of the core (37) and the longer section (32) of the support plate (38) for the fixing of the support pad (5) is formed on the left side of the core (37), whereas the edge of the longer section (32) of the support plate is turned up, first perpendicularly to the support plate and then back, towards the core, becoming parallel with the lower support plate (38) to form a mounting flange (33), behind which is fixed a step (14) in the support pad (5), and a second mounting flange (34) for fixing the other side of the support pad (5) to the lower support plate (38) is formed in the lower part towards the longer section (32) of the support plate of the core (37);
- the right side profile (4) includes a core (47) with a rectangular cross section, where the lower shorter side is elongated, forming a lower support element (41) that reaches to the left from the core to support the solar panel, while the upper shorter side of the core (47) is elongated by an upper support plate (48), which reaches to the right side of the core (47), in the opposite direction from the lower support element (41), forming thereby a mounting element (49) at the edge of the upper support plate (48), being perpendicular to and extending to both sides of the upper support plate, while the edge (51) of the upper section (50) of the mounting element is turned back towards the core (47), becoming parallel with the upper support plate (48), while the edge of the lower part (42) of the mounting element (49) is turned towards the core (47), becoming parallel with the upper support plate (48) and forming a mounting flange (43), behind which is fixed a step (14) in the support pad (5) to be mounted onto the lower surface of the upper support plate (48) and a second mounting flange (44) for fixing the second side of the support pad (5) to the upper support plate (48), is formed in the upper section of the longer side of the core (47), which is towards the upper support plate (48).

2. An integrated solar panel for a tiled roof according to claim 1, **characterised in that** the elongation of the longer left side of core (37) of the left side profile (3) is a mounting element (39), where the edge (36) of the elongated part (35) that turns upwards from the longer side of the core (37) is turned back towards the shorter support plate section (31) of the support plate (38), becoming parallel with the support plate (38), and a solar panel is installed in a channel (40) between the mounting element (39) and the upper shorter side of the core (37) in the course of the assembly of the integrated solar panel.

3. An integrated solar panel for a tiled roof according to claim 1, **characterised in that** the support pads (5) used for mounting the frame (2) between the integrated solar panel and the mounting profiles of roofing tiles are identical both in the left side profile (3) and right side profile (4), and the profile of the support pad (5) corresponds to the mounting profile of the roofing tile.

4. An integrated solar panel for a tiled roof according to any previous claim, **characterised in that** a roof mounting profile (16) is fixed to the top profile (6) by means of fasteners (19), containing openings (18) for mounting screws (20) for mounting the integrated solar panel to the roofing batten (60), whereas one side of the roof mounting profile is longer and bent at 90 degrees outwards from the profile, so that it can support the next (upper) integrated solar panel or a row of roofing tiles.

5. An integrated solar panel for a tiled roof according to claim 2, **characterised in that** a clamp (17) is fixed to the lower side of the integrated solar panel, to be hooked behind the longer side of the roof mounting profile of the lower integrated solar panel.

## Patentansprüche

1. Ein integriertes Solarpaneel (1) auf einem Ziegeldach, das eine Solarzelle (12), Rahmen (2) und Stützpolster (5) enthält, und der Rahmen (2) durch ein linksseitiges Profil (3), ein rechtsseitiges Profil (4) und ein oberes sowie unteres Profil (6) geformt ist, und die zusammen an den Enden verbunden sind, um einen rechteckigen Rahmen zu bilden, **dadurch gekennzeichnet, dass**
- das obere und untere Profil (6) einen Kern (7) mit einem rechteckigen Querschnitt enthalten, in dem die untere Seite durch ein unteres Unterstützungselement (8) verlängert wird und die längere Seite des Kerns (7), die weiter von dem Unterstützungselement entfernt ist, durch ein Befestigungselement (9) verlängert wird, wobei die Ecke (11) eines überstehenden Teils (10), das von der längeren Seite des Kerns (7) verlängert wird, auf das untere Unterstützungselement (8) gerichtet ist, und parallel zum unteren Unterstützungselement (8) verläuft, während die obere und untere Ecke des Solarmoduls entsprechend in einen Kanal (13) zwischen dem Befestigungselement (9) und der oberen Seite des Kerns (7) während des Zusammenbaus des integrierten Solarmoduls befestigt ist;
- das linkseitige Profil (3) einen Kern (37) mit einem rechteckigen Querschnitt enthält, wo die untere Seite durch eine untere Unterstützungsplatte (38) verlängert wird, die zu beiden Seiten des Kerns (37) reicht, während der kürzere Abschnitt (31) der Unterstützungsplatte an der rechten Seite des Kerns (37) gebildet wird und der längere Abschnitt (32) der Unterstützungsplatte (38) für die Befestigung des Stützpolsters (5) auf der linken Seite des Kerns (37) gebildet wird, wobei die Ecke des längeren Abschnitt (32) der Unterstützungsplatte nach oben gerichtet ist, zuerst rechtwinklig zur Unterstützungsplatte und dann zurück in Richtung des Kerns zur unteren Unterstützungsplatte (38) parallel verläuft, um einen Montageflansch (33) zu bilden, hinter dem eine Stufe (14) im Stützpolster (5) angebracht ist und ein zweiter Montageflansch (34) für die Befestigung der anderen Seite des Stützpolsters (5) zur unteren Unterstützungsplatte (38) im unteren Teil in Richtung des längeren Abschnitts (32) der Unterstützungsplatte des Kerns (37) gebildet wird;
- das rechtsseitige Profil (4) einen Kern (47) mit einem rechteckigen Querschnitt enthält, wo die untere, kürzere Seite verlängert ist und ein unteres Unterstützungselement (41) bildet, das nach links vom Kern zur Unterstützung des Solarmoduls reicht, während die obere, kürzere Seite des Kerns (47) durch eine obere Unterstützungsplatte (48) verlängert wird, die zur rechten Seite des Kerns (47), in entgegengesetzter Richtung des unteren Unterstützungselements (41) reicht, und dabei ein Befestigungselement (49) an der Ecke der oberen Unterstützungsplatte (48) bildet, und das senkrecht zu und sich zu beiden Seiten der oberen Unterstützungsplatte verlängert, während die Ecke (51) des oberen Abschnitts (50) des Befestigungselements vom Kern (47) weggedreht ist und parallel zur oberen Unterstützungsplatte (48) wird, während die Ecke des unteren Teils (42) des Befestigungselement (49) ist in Richtung Kern gerichtet (47) ist und parallel mit der oberen Unterstützungsplatte (48) wird und einen Montageflansch (43) bildet, hinter dem eine Stufe (14) im Stützpolster (5) befestigt ist, um auf die untere Oberfläche der oberen Unterstützungsplatte (48) befestigt zu werden und einem zweiten Montageflansch (44) für die Befestigung der zweiten Seite der Unterstützungsplatte (48), wird im oberen Abschnitt der längeren Seite des Kerns (47) gebildet, der sich in Richtung der oberen Unterstützungsplatte (48) befindet.

2. Ein integriertes Solarpaneel auf einem Ziegeldach gemäß Anspruch 1, **dadurch gekennzeichnet, dass** die Verlängerung der längeren, linken Seite des Kerns (37) des linksseitigen Profils (3) ein Befestigungselement (39) ist, wo die Ecke (36) des verlängerten Teils (35), das sich von der längeren Seite des Kerns (37) nach oben dreht, in Richtung des kürzeren Unterstützungsplattenabschnitts (31) der Unterstützungsplatte (38) zurückgedreht wird, parallel zur Unterstützungsplatte (38) wird, und ein Solarmodul in einem Kanal (40) zwischen dem Befestigungselement (39) und der oberen, kürzeren Seite des Kerns (37) während des Zusammenbaus des Integrierten Solarmoduls installiert wird.

3. Ein integriertes Solarpaneel auf einem Ziegeldach gemäß Anspruch 1, **dadurch gekennzeichnet, dass** die Stützpolster (5) für die Befestigung des Rahmens (2) zwischen dem integrierten Solarmodul und den Befestigungsprofilen der Dachziegel auf dem linksseitigen Profil (3) und rechtsseitigem Profil (4) identisch sind und das Profil des Stützpolsters (5) dem Befestigungsprofil des Dachziegels entspricht.

4. Ein integriertes Solarpaneel auf einem Ziegeldach gemäß irgendeinem vorherigen Anspruch, **dadurch gekennzeichnet, dass** ein Dachbefestigungsprofil (16) an das obere Profil (6) über Befestigungsteile (19) befestigt ist, und das Öffnungen (18) für Montageschrauben (20) für die Befestigung der integrierten Solarmoduls an Dachlatten (60) enthält, wobei eine Seite des Dachbefestigungsprofils länger und im 90° Winkel weg vom Profil gebogen ist, sodass es das nächste (obere) integrierte Solarmodul oder eine Reihe Dachziegel halten kann.

5. Ein integriertes Solarpaneel auf einem Ziegeldach gemäß Anspruch 2, **dadurch gekennzeichnet, dass** eine Klemme (17) an der unteren Seite des integrierten Solarmoduls angebracht und hinter der längeren Seite des Dachbefestigungsprofils des unteren, integrierten Solarmoduls angehängt ist.

## Revendications

1. Panneau solaire intégré (1) à un toit en tuiles, qui comprend une cellule solaire (12), un cadre (2) et des coussinets de support (5), le cadre (2) est formé par un profil latéral gauche (3), un côté droit profilé (4) et un profilé supérieur et inférieur (6) reliés mutuellement aux extrémités pour fermer un cadre rectangulaire, **caractérisé en ce que**
- les profilés supérieur et inférieur (6) comprennent un noyau (7) de section transversale rectangulaire où le côté inférieur est rallongé par un élément de support inférieur (8) et le côté le plus long du noyau (7) plus éloigné du support est rallongé par un élément de montage (9) où le bord (11) d'une partie saillante (10) partant du côté le plus long de l'âme (7) est dirigé vers l'élément de support inférieur (8), devenant parallèle au côté inférieur l'élément de support (8), tandis que le bord supérieur ou inférieur du panneau solaire est monté respectivement dans un canal (13) entre l'élément de montage (9) et la face supérieure de l'âme (7) au cours du montage de l'élément intégré panneau solaire;
- le profilé latéral gauche (3) comprend un noyau (37) de section transversale rectangulaire où le côté inférieur est rallongé par une plaque de support inférieure (38) qui atteint les deux côtés du noyau (37), tandis que la section plus courte (31) de la plaque de support est formée sur le côté droit du noyau (37) et que la partie la plus longue (32) de la plaque de support (38) pour la fixation du coussinet de support (5) est formée sur le côté gauche du noyau (37), alors que le bord de la partie la plus longue (32) de la plaque de support est relevé, d'abord perpendiculairement à la plaque de support, puis en arrière, vers le noyau, devenant parallèle à la plaque de support inférieure (38) pour former une bride de montage (33) derrière laquelle est fixé un cran (14) dans le coussinet de support (5) et une deuxième bride de montage (34) pour fixer l'autre côté du coussinet de support (5) à la plaque de support inférieure (38) est formé dans la partie inférieure en direction de la partie la plus longue (32) de la plaque de support du noyau (37);
- le profilé latéral droit (4) comprend un noyau (47) de section transversale rectangulaire où le côté inférieur le plus court est rallongé, formant un élément de support inférieur (41) qui touche à gauche du noyau pour supporter le panneau solaire, tandis que le côté le plus court supérieur du noyau (47) est rallongé par une plaque de support supérieure (48) qui atteint le côté droit du noyau (47) dans le sens opposé à l'élément de support inférieur (41), formant ainsi un élément de montage (49) situé au bord de la plaque de support supérieure (48) étant perpendiculaire aux deux côtés de la plaque de support supérieure et s'étendant perpendiculairement à celui-ci, tandis que le bord (51) de la section supérieure (50) de l'élément de montage est tourné vers l'arrière du noyau (47), devenant parallèle à la plaque de support supérieure (48), tandis que le bord de la partie inférieure (42) de l'élément de montage (49) est tourné vers le noyau (47) devenant parallèle à la partie supérieure de la plaque de support (48) et formant une bride de montage (43) derrière laquelle est fixé un cran (14) dans le coussinet de support (5) destiné à être monté sur la surface inférieure de la plaque de support supérieure (48) et une seconde bride de montage (44) pour la fixation du second côté de la plaque de support (5) sur la plaque de support supérieure (48), est formé dans la partie supérieure du côté le plus long du noyau (47) qui est dirigé vers la plaque de support supérieure (48).

2. Panneau solaire intégré à un toit en tuiles selon la revendication 1, **caractérisé en ce que** le l'allongement du côté gauche le plus long du noyau (37) du profilé gauche (3) est un élément de montage (39) dont le bord (36) de la partie rallongée (35) qui tourne vers le haut à partir du côté le plus long du noyau (37) est renvoyée vers la section de plaque de support plus courte (31) de la plaque de support (38), devenant parallèle à la plaque de support (38), et un panneau solaire est installé dans un canal (40) entre l'élément de montage (39) et le côté le plus court supérieur du noyau (37) au cours de l'assemblage du panneau solaire intégré.

3. Panneau solaire intégré à un toit en tuiles selon la revendication 1, **caractérisé en ce que** les coussinets de support (5) utilisés pour monter le cadre (2) entre le panneau solaire intégré et les profilés de montage des tuiles de toiture sont identiques toutes les deux dans le profilé gauche (3) et le profilé latéral droit (4) et le profilé de la plaque de support (5) correspond au profilé de montage de la tuile.

4. Panneau solaire intégré à un toit en tuiles selon l'une quelconque des revendications précédentes, **caractérisé en ce qu'**un profilé de montage de toit (16) est fixé au profilé supérieur (6) au moyen de fixations (19) contenant des ouvertures (18) pour des vis de fixation (20) pour monter le panneau solaire intégré sur le liteau de toiture (60), tandis qu'un côté du profilé de montage du toit est plus long et plié à 90 degrés vers l'extérieur du profilé, de manière à pouvqir supporter le prochain panneau solaire intégré (supérieur) ou une rangée de tuiles de toiture.

5. Panneau solaire intégré à un toit en tuiles selon la revendication 2, **caractérisé en ce qu'**une pince (17) est fixée au côté inférieur du panneau solaire intégré, pour s'accrocher derrière le côté le plus long du profilé de montage sur le toit au panneau solaire intégré inférieur.
